(19) Europäisches Patentamt
European Patent Office
Office européen des brevets

(11) **EP 4 173 839 A1**

(12) **EUROPEAN PATENT APPLICATION**

(43) Date of publication:
**03.05.2023 Bulletin 2023/18**

(21) Application number: **21306487.6**

(22) Date of filing: **26.10.2021**

(51) International Patent Classification (IPC):
***B43K 19/18*** (2006.01)   ***C09D 13/00*** (2006.01)

(52) Cooperative Patent Classification (CPC):
**B43K 19/18; C09D 13/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Société BIC**
**92110 Clichy (FR)**

(72) Inventors:
• **GOUEREC, Julien**
  **92110 Clichy (FR)**
• **NAPOLY, Justine**
  **92110 Clichy (FR)**

(74) Representative: **Peterreins Schley**
**Patent- und Rechtsanwälte PartG mbB**
**Hermann-Sack-Straße 3**
**80331 München (DE)**

(54) **LEAD COMPRISING BINDER MADE FROM CELLULOSE ESTERS**

(57)    The present disclosure relates to a writing instrument comprising a lead comprising a binder, a filler and a coloring agent. The binder comprises a cellulose ester, wherein said cellulose ester comprises one or more acetate moieties and one or more ester moieties selected from $C_3$-$C_{10}$-carboxylates.

EP 4 173 839 A1

## Description

### Technical Field

The present invention relates to the field of writing instruments. More specifically, the present invention relates to writing instruments, comprising leads comprising cellulose esters.

### Background

Pencils are writing instruments which commonly comprise a lead placed in a casing. The pencils may be used to create marks by moving it across a writing surface. The physical abrasion between the lead and the writing surface may lead to a deposit of the lead's material which adheres to the writing surface creating a mark.

Conventional pencil leads, in particular graphite pencil leads, are commonly manufactured from finely ground graphite and clay powders. The mixture of the component is shaped into the desired lead shape. The preformed lead is then fired to harden the lead.

Traditional colored pencil leads typically comprise coloring agents, such as dyes or pigments, instead of graphite. The coloring agents are usually mixed with polymeric binders to form a lead. Traditional colored pencil leads are generally not calcinated. Indeed, the polymeric binders, commonly do not require a firing step to harden the lead, but rather at least one drying step in a drying chamber.

Synthetic colored pencil leads typically comprise coloring agents, such as dyes or pigments, instead of graphite. The coloring agents are usually mixed with polymeric binders, such as acrylonitrile-butadiene-styrene-copolymer (ABS), to form a lead. Unlike clay, the polymeric binders commonly do not require a firing step to harden the lead.

Polymeric binders such as ABS are based on petrochemicals. The production and disposal of polymeric binders based on petrochemicals may be detrimental to the environment. Further, the choice of binder is important in regard to the mechanical properties of the lead. One important property for colored pencil leads is their resistance to fracturing. However, increasing a colored pencil's resistance to fracturing is often accompanied by a reduction of deposit quality. The quality of deposit is important to performance, in particular the intensity of the color deposited on a writing surface, e.g. paper.

The present disclosure aims to address one or more of the aforementioned issues in optimizing the lead.

### Summary

In a first aspect, the present disclosure relates to a writing instrument comprising a lead comprising a binder, a filler and a coloring agent. The binder comprises a cellulose ester, wherein said cellulose ester comprises one or more acetate moieties and one or more ester moieties selected from $C_3$-$C_{10}$-carboxylates.

In some embodiments the cellulose ester may comprise one or more ester moieties selected from saturated $C_3$-$C_8$-carboxylates, in particular moieties selected from propionate, more specifically n-propionate or iso-propionate, butyrate, more specifically n-butyrate, sec-butyrate or tert-propionate, pentanoate, hexanoate; or mixtures thereof.

In some embodiments the cellulose ester may comprise cellulose acetate propionate and/or cellulose acetate butyrate, in particular cellulose acetate propionate.

In some embodiments the cellulose ester may comprise the acetate moieties and the one or more further ester moieties in a molar ratio of from about 10:1 to about 1:10, more specifically, between about 1:1 to about 1:4 and in particular between about 1:1.5 to about 1:3.

In some embodiments the cellulose ester may comprise a number-average molecular weight of between about 15.000 g/mol to about 500.000 g/mol, more specifically between about 25.000 g/mol to about 400.000 g/mol and in particular between about 50.000 g/mol to about 200.000 g/mol.

In some embodiments the lead may comprise the binder in amounts of between about 5 and about 70 wt.-%, more specifically between about 7 and about 50 wt.-%, and in particular between about 10 and about 40 wt.-%, relative to the total weight of the lead.

In some embodiments the filler may comprise an inorganic filler, in particular a mineral filler.

In some embodiments the filler may comprise clay, talc, boron nitride, silica, calcium carbonate, mica, steatite powder and mixtures thereof.

In some embodiments the filler may comprise a clay selected from the group consisting of montmorillonite, bentonite, kaolin and mixtures thereof; and in particular kaolin.

In some embodiments the filler may exhibit a lamellar structure.

In some embodiments the filler may be colorless, white, or may have a CIELAB L* value of greater than about 70, more specifically greater than about 75, and in particular greater than about 80, measured according to ISO R457.

In some embodiments the filler may comprise particles having a particle size D50 by weight of between 1 and

5 μm, more specifically between 1 and 4 μm.

In some embodiments the lead may comprise the filler in amounts of between about 15 and about 75 wt.-%, more specifically between about 20 and about 65 wt.-%, and in particular between about 25 and about 55 wt.-%, relative to the total weight of the lead.

In some embodiments the coloring agent may comprise one or more pigments, one or more dyes, or mixtures thereof.

In some embodiments the coloring agent may comprise one or more pigments, more specifically one or more organic pigments.

In some embodiments the coloring agent may comprise azo pigments, diazo pigments, diarylide pigments pthalocyanines, dioxazines, quinacridones, iron oxides, pyrrole diones, titanium oxides, carbon black, graphites, ultramarine, benzimidazole and iron-cyan complexes.

In some embodiments the coloring agent may comprise Pigment Yellow 12, Pigment Yellow 110, Pigment Yellow 155, Pigment Yellow 180, Pigment Orange 13, Pigment Orange 36, Pigment Orange 64, Pigment Blue 15:1, Pigment Blue 15:3, Pigment Green 7, Pigment Green 36, Pigment Violet 19, Pigment Violet 23, Pigment Red 48:2, Pigment Red 57:1, Pigment Red 122, Pigment Red 170, Pigment Red 254, Pigment Red 266, Pigment Black 7, Pigment Black 6, Pigment Yellow 42, Pigment Red 101, Pigment White 6.

In some embodiments the lead may comprise the coloring agent in amounts of between about 2 and about 50 wt.-%, more specifically between about 5 and about 40 wt.-%, and in particular between about 10 and about 30 wt.-%, relative to the total weight of the lead.

In some embodiments the lead may further comprise one or more additives.

In some embodiments the one or more additives may be selected from the group consisting of slip agents, processing agents, coupling agents, dispersants, lubricants, plasticizers, preservatives, and mixtures thereof.

In some embodiments the one or more additives may be selected from the group consisting of

- fatty acid salts;
- fatty acids;
- fatty acid esters;
- plasticizers, in particular phthalate-based plasticizers; adipate-based plasticizers; benzoate-based plasticizers; sebacate-based plasticizers; citrate-based plasticizers;
- amides, in particular as ethylene bis stearamide;
- waxes;
- glycerol and derivatives thereof, in particular glycerol behenate;
- siloxanes;

more specifically fatty acid salts, plasticizers, amides, glycerol and derivatives thereof.

In some embodiments the one or more additives may be selected from the group consisting of stearates such as calcium stearate, magnesium stearate, sodium stearate, zinc stearate and mixtures thereof; amides, in particular stearamides such as ethylene bis stearamide, waxes, fatty acids, glycerol and its derivatives such as glycerol behenate, glycerol dibehenate, glycerol stearate; and/or polyglycerol diisostearate, in particular glycerol behenate, siloxane grafted on polypropylene, maleic anhydride grafted polypropylene, phthalate, adipate, benzoate, sebacate; and/or citrate plasticizers and mixtures thereof; or from the group consisting of calcium stearate, ethylene bis stearamide, phthalates and mixtures thereof.

In some embodiments the lead may comprise the one or more additives in a total amount of between about 2 and about 35 wt.-%, more specifically between about 5 and about 30 wt.-%, and in particular between about 10 and about 25 wt.-%, relative to the total weight of the lead.

In some embodiments the lead may comprise, relative to the total weight of the lead, between about 0.5 and about 35 wt.-%, more specifically between about 1 and about 30 wt.-%, and in particular between about 1.4 and about 25 wt.-%, of one or more fatty acids, more specifically fatty acids comprising between about 8 and about 24 carbon atoms, in particular one or more fatty acids selected from caprylic acid, capric acid, lauric acid, myristic acid, palmitic acid, stearic acid.

In some embodiments the lead may comprise, relative to the total weight of the lead, between about 0.5 and about 35 wt.-%, more specifically between about 1 and about 30 wt.-%, and in particular between about 1.4 and about 25 wt.-%, of one or more fatty acid salts, more specifically fatty acid salts comprising between about 8 and about 24 carbon atoms, in particular salts selected from caprylate, caprate, laurate, myristate, palmitate and/or stearate salts.

In some embodiments the lead may comprise, relative to the total weight of the lead, between about 0.5 and about 35 wt.-%, more specifically between about 1 and about 30 wt.-%, and in particular between about 1.4 and about 25 wt.-%, of one or more fatty acid salts comprising an alkali metal and/or earth alkali metal, more specifically fatty acid salts comprising between about 8 and about 24 carbon atoms comprising sodium, calcium and/or magnesium, in particular calcium salts of one or more fatty acids selected from calcium caprylate, calcium caprate, calcium laurate, calcium myristate, calcium palmitate, calcium stearate.

In some embodiments the lead may comprise, relative to the total weight of the lead, between about 0.5 and about 15 wt.-%, more specifically between about 1 and about 7.0 wt.-%, and in particular between about 1.4 and about 5.0 wt.-%, of one or more fatty acid salts comprising a transition metal, more specifically fatty acid salts comprising between about 8 and about 24 carbon atoms comprising a transition metal, in particular zinc salts of one or more fatty acids selected from zinc caprylate, zinc caprate, zinc laurate, zinc myristate, zinc palmitate, zinc stearate.

In some embodiments the lead may comprise, relative to the total weight of the lead, between about 0.5 and about 15 wt.-%, more specifically between about 1 and about 10 wt.-%, and in particular between about 2 and about 8 wt.-%, of one or more plasticizers.

In some embodiments the one or more plasticizers may comprise a plasticizer selected from phthalate-based plasticizers, adipate-based plasticizers, benzoate-based plasticizers, sebacate-based plasticizers, and citrate-based plasticizers; and in particular a benzoate-based plasticizer.

In some embodiments the lead may exhibit a hexagonal, round or triangular cross section.

In some embodiments the lead may be extrudable, extruded or preparable by extrusion.

In some embodiments the lead may not be calcinable, not calcined or not preparable by calcination.

In some embodiments the lead may comprise less than about 10 wt.-%, more specifically less than about 5 wt.-% and in particular no or substantially no polyolefins or copolymers comprising olefine-based monomer units.

In some embodiments the lead may comprise less than about 10 wt.-%, more specifically less than about 5 wt.-% and in particular no or substantially no polystyrene or copolymers comprising styrene-based monomer units.

In some embodiments the lead may comprise less than about 10 wt.-%, more specifically less than about 5 wt.-% and in particular no or substantially no hydroxyalkyl cellulose and alkyl cellulose; and in particular no hydroxypropyl cellulose.

In some embodiments the lead may comprise less than about 10 wt.-%, more specifically less than about 5 wt.-% and in particular no or substantially no lactic acid-based polymer, in particular polylactic acid.

In some embodiments the lead may have a diameter of between about 2 and 4.2 mm, more specifically between about 2 and about 2.3 mm, or between about 3 and about 3.8 mm or between about 3.4 and about 3.8 mm.

In some embodiments the writing instrument may further comprise a casing enclosing the lead.

In some embodiments the casing may comprise wood or wood substitute, in particular wherein the wood substitute can comprise polyolefins or copolymers comprising olefine-based monomer units, polystyrene or copolymers comprising styrene-based monomer units, lactic acid-based polymer, in particular polylactic acid and mixtures thereof.

In some embodiments the casing may be co-extrudable or co-extruded with the lead.

In some embodiments the writing instrument may further comprise an intermediate layer between the lead and the casing, wherein the intermediate layer is configured to increase the adhesion between the lead and the casing.

In some embodiment the intermediate layer may comprise ethylene butylene acrylate, a mixture of ethylene butylene acrylate and cellulose, ethylene vinyl acetate and/or a mixture of ethylene vinyl acetate and cellulose.

In some embodiments the casing may be co-extrudable or co-extruded with the lead and the intermediate layer.

In a second aspect, the present disclosure related to a method of preparing a writing instrument comprising a lead comprising a binder, a filler and a coloring agent. The binder comprises a cellulose ester, wherein said cellulose ester comprises one or more acetate moieties and one or more further ester moieties selected from $C_3$-$C_{10}$-carboxylates. The method comprises combining the binder, the filler and the coloring agent. In some embodiments, the lead and the casing may be further characterized as disclosed for the first aspect of the present disclosure.

In some embodiments the lead may be prepared by extrusion.

In a third aspect, the present disclosure relates to a lead for a writing instrument comprising a lead comprising a binder, a filler and a coloring agent. The binder comprises a cellulose ester, wherein said cellulose ester comprises one or more acetate moieties and one or more ester moieties selected from $C_3$-$C_{10}$-carboxylates. In some embodiments, the lead may be further characterized as disclosed for the first aspect of the present disclosure.

**Detailed Description**

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

It has been surprisingly found that a binder comprising a cellulose ester, in particular a cellulose ester comprising one or more acetate moieties and one or more ester moieties selected from $C_3$-$C_{10}$-carboxylates, may be advantageously used in leads for writing instruments. The binder may be derived from renewable resources and/or may be biodegradable. The term "biodegradable" within this disclosure is not particularly limited and may in particular refer to a material property wherein the material decomposes by the action of microbes, in particular wherein the material decomposes into water, carbon dioxide, and biomass. The biodegradation may be able to take place in any environment comprising microbes or only in industrial composters. The biodegradation may convert 90% of the polymer to water, carbon dioxide and biomass within as time span of less than 10 years, more specifically less than 3 years and in particular within 6 months.

Furthermore, it has been surprisingly found that a binder comprising a cellulose ester comprising one or more acetate moieties and one or more ester moieties selected from $C_3$-$C_{10}$-carboxylates, may provide a lead with an improved resistance to breakage and color deposit. In particular, it has been found that deposits formed from leads comprising the binder comprising a cellulose ester one or more acetate moieties and one or more ester moieties selected from $C_3$-$C_{10}$-carboxylates may exhibit a higher $C^*_{ab}$ value in the CIELCh color space. A higher $C^*_{ab}$ values relates to an increased chroma. Within this disclosure the term "chroma" relates to its typical meaning in the art. In particular the term "chroma" may refer to colorfulness of an area judged as a proportion of the brightness of a similarly illuminated area that appears white or highly transmitting.

Accordingly, in a first aspect, the present disclosure relates to a writing instrument comprising a lead comprising a binder, a filler and a coloring agent. The binder comprises a cellulose ester, wherein said cellulose ester comprises one or more acetate moieties and one or more ester moieties selected from $C_3$-$C_{10}$-carboxylates.

Cellulose esters are cellulose derivatives wherein at least part of the cellulose's hydroxyl groups have reacted with a chemical reagent to form an ester bond. Many cellulose esters are renewable resources and/or biodegradable. The chemical reagent may for example comprise reactive acetate groups to form cellulose acetate or reactive propionate groups to form cellulose propionate. Cellulose may also be directly reacted with both a chemical reagent comprising a reactive acetate group and a reagent comprising a reactive propionate group, leading to a cellulose ester with two different substituents, referred to as cellulose acetate propionate.

In some embodiments the cellulose ester may comprise one or more ester moieties selected from saturated $C_3$-$C_8$-carboxylates, in particular moieties selected from propionate, more specifically n-propionate or iso-propionate, butyrate, more specifically n-butyrate, sec-butyrate or tert-propionate, pentanoate, hexanoate; or mixtures thereof.

In some embodiments the cellulose ester may comprise cellulose acetate propionate and/or cellulose acetate butyrate, in particular cellulose acetate propionate. A binder comprising cellulose acetate propionate may provide a lead with a high resistance to breakage and good deposit.

In some embodiments the cellulose ester may comprise the acetate moieties and the one or more further ester moieties in a molar ratio of from about 10:1 to about 1:10, more specifically, between about 1:1 to about 1:4 and in particular between about 1:1.5 to about 1:3.

Depending upon the amount of each reagent or the reaction conditions during the esterification reaction the degree of substitution may vary. Further, the ratio of the acetate reagent to the propionate reagent may influence the ratio of acetate to propionate substituents present in the final cellulose ester. The ratio of acetate to propionate substituents may influence the properties of the final cellulose ester. A higher ratio of propionate may increase the compatibility with plasticizers or lubricants.

In some embodiments the cellulose ester may comprise a number-average molecular weight of between about 15.000 g/mol to about 500.000 g/mol, more specifically between about 25.000 g/mol to about 400.000 g/mol and in particular between about 50.000 g/mol to about 200.000 g/mol. An increased number-average molecular weight may increase the mechanical properties of the cellulose ester. However, an increased number-average molecular weight may also increase the viscosity in its molten state, which may be undesirable during processing.

In some embodiments the lead may comprise the binder in amounts of between about 5 wt.-% and about 70 wt.-%, more specifically between about 7 wt.-% and about 50 wt.-%, and in particular between about 10 wt.-% and about 40 wt.-%, relative to the total weight of the lead.

The term "binder" within this disclosure is not particularly limited and i.a. refers to its common meaning in the art. In particular, it may refer to an e.g. liquid or viscous substance that hardens by a chemical or physical process and binds by i.a. physically trapping or encasing or chemically joining other components, in this case in particular the filler and/or the coloring agent. A higher amount of binder may improve the mechanical properties of the lead but may reduce the chroma of the deposit.

In some embodiments, the filler may comprise an inorganic filler, in particular a mineral filler. The term "filler" within this disclosure is not particularly limited and i.a. refers to its common meaning in the art. In particular, it may refer to a particulate material added to the lead to increase its bulk, weight, viscosity, opacity and/or strength.

In some embodiments the filler may comprise clay, talc, boron nitride, silica, calcium carbonate, mica, steatite powder and mixtures thereof.

In some embodiments the filler may comprise a clay selected from the group consisting of montmorillonite, bentonite, kaolin and mixtures thereof; and in particular kaolin.

In some embodiments the filler may exhibit a lamellar structure. In particular, clay, boron nitride, mica, talc and mixtures thereof may exhibit a lamellar structure. Fillers exhibiting a lamellar structure may increase the leads softness during writing, as the lamellar structure may break more easily during writing when in contact with a writing surface.

In some embodiments the filler may be colorless, white, or may have a CIELAB L* value of greater than about 70, more specifically greater than about 75, and in particular greater than about 80, measured according to ISO R457. A higher CIELAB L* value may result in lighter colors and/or less alteration of the color provided by the pigments and/or dyes present in the lead.

In some embodiments the filler may comprise particles having a particle size D50 by weight of between 1 and 5 $\mu$m, more specifically between 1 and 4 $\mu$m. The particle size D50 by weight may be measured by sedimentation for example using a SEDIGRAPH ® III Plus 5125 apparatus from the company Micromeritics GmbH, Germany.

Fillers with a smaller particle size may lead to a more homogenous deposit. However, lower particle sizes may also tend to aggregate and hence be more difficult to use in manufacturing.

In some embodiments the lead may comprise the filler in amounts of between about 15 and about 75 wt.-%, more specifically between about 20 and about 65 wt.-%, and in particular between about 25 and about 55 wt.-%, relative to the total weight of the lead.

The filler may improve the leads mechanical properties. The fillers may increase the leads resistance to breaking. Further, a higher amount of fillers may reduce the production cost of the lead, however, it may also lead to a reduction in chroma of the deposit.

In some embodiments the coloring agent may comprise one or more pigments, one or more dyes, or mixtures thereof. The terms "pigment" and "dye" within this disclosure are not particularly limited and i.a. refers to its common meaning in the art. In particular "pigment" may refer that are completely or nearly insoluble in water, whereas "dye" may refer to soluble colorants.

The pigments and dyes may determine the color of the lead and/or of the deposit on the paper.

In some embodiments the coloring agent may comprise one or more pigments, more specifically one or more organic pigments.

In some embodiments the coloring agent may comprise azo pigments, diazo pigments, diarylide pigments, pthalocyanines, dioxazines, quinacridones, iron oxides, pyrrole diones, titanium oxides, carbon black, graphites, ultramarine, benzimidazole and iron-cyan complexes.

In some embodiments the coloring agent may comprise Pigment Yellow 12, Pigment Yellow 110, Pigment Yellow 155, Pigment Yellow 180, Pigment Orange 13, Pigment Orange 36, Pigment Orange 64, Pigment Blue 15:1, Pigment Blue 15:3, Pigment Green 7, Pigment Green 36, Pigment Violet 19, Pigment Violet 23, Pigment Red 48:2, Pigment Red 57:1, Pigment Red 122, Pigment Red 170, Pigment Red 254, Pigment Red 266, Pigment Black 7, Pigment Black 6, Pigment Yellow 42, Pigment Red 101, Pigment White 6.

In some embodiments the lead may comprise the coloring agent in amounts of between about 2 and about 50 wt.-%, more specifically between about 5 and about 40 wt.-%, and in particular between about 10 and about 30 wt.-%, relative to the total weight of the lead.

A higher amount of coloring agents may lead to a deposit with a higher chroma. However, a higher amount of coloring agent may reduce the mechanical properties of the lead, in particular resistance to breaking and/or bending. Further, a higher amount of coloring agents may lead to higher material costs.

In some embodiments the lead may further comprise one or more additives.

In some embodiments the one or more additives may be selected from the group consisting of slip agents, processing agents, coupling agents, dispersants, lubricants, plasticizers, preservatives, and mixtures thereof.

In some embodiments the one or more additives may be selected from the group consisting of

- fatty acid salts;
- fatty acids;
- fatty acid esters;
- plasticizers, in particular phthalate-based plasticizers; adipate-based plasticizers; benzoate-based plasticizers; sebacate-based plasticizers; citrate-based plasticizers;
- amides, in particular as ethylene bis stearamide;
- waxes;
- glycerol and derivatives thereof, in particular glycerol behenate;
- siloxanes;

more specifically fatty acid salts, plasticizers, amides, glycerol and derivatives thereof.

The one or more additives may be selected from the group consisting of stearates such as calcium stearate, magnesium stearate, sodium stearate, zinc stearate and mixtures thereof; amides, in particular stearamides such as ethylene bis stearamide, waxes, fatty acids, glycerol and its derivatives such as glycerol behenate, glycerol dibehenate, glycerol stearate; and/or polyglycerol diisostearate, in particular glycerol behenate, siloxane grafted on polypropylene, maleic anhydride grafted polypropylene, phthalate, adipate, benzoate, sebacate; and/or citrate plasticizers and mixtures thereof; or from the group consisting of calcium stearate, ethylene bis stearamide, phthalates and mixtures thereof.

Stearates may be biodegradable and may act as lubricants during the writing action, which may protect the paper from excessive friction which could lead to damage. Moreover, stearates may have little influence on the color and quality of the deposit. Stearates may aid during manufacturing of the lead, in particular manufacturing by extrusion, e.g. by allowing the polymer-chains of the binder to slip past one another.

In some embodiments the lead may comprise the one or more additives in a total amount of between about 2 and about 35 wt.-%, more specifically between about 5 and about 30 wt.-%, and in particular between about 10 and about 25 wt.-%, relative to the total weight of the lead.

In some embodiments the lead may comprise, relative to the total weight of the lead, between about 0.5 and about 35 wt.-%, more specifically between about 1 and about 30 wt.-%, and in particular between about 1.4 and about 25 wt.-%, of one or more fatty acids, more specifically fatty acids comprising between about 8 and about 24 carbon atoms, in particular one or more fatty acids selected from caprylic acid, capric acid, lauric acid, myristic acid, palmitic acid, stearic acid.

In some embodiments the lead may comprise, relative to the total weight of the lead, between about 0.5 and about 35 wt.-%, more specifically between about 1 and about 30 wt.-%, and in particular between about 1.4 and about 25 wt.-%, of one or more fatty acid salts, more specifically fatty acid salts comprising between about 8 and about 24 carbon atoms, in particular salts selected from caprylate, caprate, laurate, myristate, palmitate and/or stearate salts.

In some embodiments the lead may comprise, relative to the total weight of the lead, between about 0.5 and about 35 wt.-%, more specifically between about 1 and about 30 wt.-%, and in particular between about 1.4 and about 25 wt.-%, of one or more fatty acid salts comprising an alkali metal and/or earth alkali metal, more specifically fatty acid salts comprising between about 8 and about 24 carbon atoms comprising sodium, calcium and/or magnesium, in particular calcium salts of one or more fatty acids selected from calcium caprylate, calcium caprate, calcium laurate, calcium myristate, calcium palmitate, calcium stearate.

The fatty acids and fatty acid salts comprising an alkali metal and/or earth alkali metal may be biodegradable. Further, the fatty acids and fatty acid salts comprising an alkali metal and/or earth alkali metal may act as lubricants during the writing action, which may protect the paper from excessive friction. Moreover, the fatty acids and fatty acid salts comprising an alkali metal and/or earth alkali metal may have little influence on the color and quality of the deposit.

In some embodiments the lead may comprise, relative to the total weight of the lead, between about 0.5 and about 15 wt.-%, more specifically between about 1 and about 7.0 wt.-%, and in particular between about 1.4 and about 5.0 wt.-%, of one or more fatty acid salts comprising a transition metal, more specifically fatty acid salts comprising between about 8 and about 24 carbon atoms comprising a transition metal, in particular zinc salts of one or more fatty acids selected from zinc caprylate, zinc caprate, zinc laurate, zinc myristate, zinc palmitate, zinc stearate.

Fatty acid salts comprising a transition metal may act as lubricants during production and may aid for example, in removing leads from molds. In particular zinc stearate may be a preferable lubricant during production. Further, fatty acid salts comprising a transition metal may be advantageous during manufacturing by extrusion, in particular by allowing the polymer-chains of the binder to slip past one another.

In some embodiments the lead may comprise, relative to the total weight of the lead, between about 0.5 and about 15 wt.-%, more specifically between about 1 and about 10 wt.-%, and in particular between about 2 and about 8 wt.-%, of one or more plasticizers.

The term "plasticizer" within this disclosure is not particularly limited and i.a. refers to its common meaning in the art, e.g. as established in Jan W. Gooch (ed.), Encyclopedic Dictionary of Polymers, 2007, page 727, entry "Plasticizer". Alternatively or additionally, the term "plasticizer" may refer to a substance, which reacts physically with the lead's components, in particular its polymeric components, to increase its flexibility, elongatibility and/or workability.

In some embodiments the one or more plasticizers may comprise a plasticizer selected from phthalate-based plasticizers, adipate-based plasticizers, benzoate-based plasticizers, sebacate-based plasticizers, and citrate-based plasticizers; and in particular a benzoate-based plasticizer.

Plasticizers may reduce the hardness of the lead, which may reduce the required abrasion for creating the deposit and increase the leads flexibility. However, a high amount of plasticizers may also reduce the leads resistance to breakage and/or bending.

In some embodiments the lead may be extrudable, extruded or preparable by extrusion.

In some embodiments the lead may not be calcinable, not calcined or not preparable by calcination. The term "calcination" within this disclosure is not particularly limited and i.a. refers to its common meaning in the art, e.g. as established in Jan W. Gooch (ed.), Encyclopedic Dictionary of Polymers, 2007, page 147, entry "Calcination". In particular, the term "calcination" refers to processes wherein solid chemical compounds, such as clay, are heated to high temperatures (e.g. at least about 200 °C), .

An extrudable lead may be more efficient to manufacture, compared to a calcinable lead. In particular, the extrusion may save time and energy during manufacturing compared to calcining. Further, during calcination the pigment and/or dyes may be damaged by the high temperatures, leading to a deposit with less chroma and/or altered colors.

In some embodiments the lead may comprise less than about 10 wt.-%, more specifically less than about 5 wt.-% and in particular no or substantially no polyolefins or copolymers comprising olefine-based monomer units. Polymers comprising polyolefins or copolymers comprising olefine-based monomer units may not be biodegradable.

In some embodiments the lead may comprise less than about 10 wt.-%, more specifically less than about 5 wt.-% and in particular no or substantially no polystyrene or copolymers comprising styrene-based monomer units. Polymers comprising polystyrene or copolymers comprising styrene-based monomer units may not be biodegradable.

In some embodiments the lead may comprise less than about 10 wt.-%, more specifically less than about 5 wt.-% and in particular no or substantially no hydroxyalkyl cellulose and alkyl cellulose; and in particular no hydroxypropyl cellulose.

In some embodiments the lead may comprise less than about 10 wt.-%, more specifically less than about 5 wt.-% and in particular no or substantially no lactic acid-based polymer, in particular polylactic acid.

Leads comprising polyolefins, copolymers comprising olefine-based monomer units, polystyrene, copolymers comprising styrene-based monomer units, hydroxyalkyl cellulose, alkyl cellulose or lactic acid-based polymers may have a high hardness and abrasion resistance, which may damage the writing surface during use of the writing instrument.

In some embodiments the lead may have a diameter of between about 2 and 4.2 mm, more specifically between about 2 and about 2.3 mm, or between about 3 and about 3.8 mm or between about 3.4 and about 3.8 mm.

In some embodiments the writing instrument may further comprise a casing enclosing the lead, in particular in order to facilitate the use by the consumer. The casing may protect the lead from the heat from the users hands and the users hands from discoloration by the lead.

In some embodiments the casing may comprise wood or wood substitute, in particular wherein the wood substitute can comprise polyolefins or copolymers comprising olefine-based monomer units, polystyrene or copolymers comprising styrene-based monomer units, lactic acid-based polymer, in particular polylactic acid and mixtures thereof.

In some embodiments the lead may exhibit a hexagonal, round or triangular cross section.

In some embodiments the casing may be co-extrudable or co-extruded with the lead.

In some embodiments the casing may exhibit a hexagonal, round or triangular cross section.

In some embodiments the writing instrument may further comprise an intermediate layer between the lead and the casing, wherein the intermediate layer is configured to increase the adhesion between the lead and the casing.

In some embodiment the intermediate layer may comprise ethylene butylene acrylate, a mixture of ethylene butylene acrylate and cellulose, ethylene vinyl acetate and/or a mixture of ethylene vinyl acetate and cellulose.

In some embodiments the casing may be co-extrudable or co-extruded with the lead and the intermediate layer.

Co-extruding different layers may improve the efficiency of the extrusion process, compared to extruding the layers in a sequential manner.

In a second aspect, the present disclosure related to a method of preparing a writing instrument comprising a lead comprising a binder, a filler and a coloring agent. The binder comprises a cellulose ester, wherein said cellulose ester comprises one or more acetate moieties and one or more further ester moieties selected from $C_3$-$C_{10}$-carboxylates. The method comprises combining the binder, the filler and the coloring agent.

In some embodiments the lead may be prepared by extrusion.

In a third aspect, the present disclosure relates to a lead for a writing instrument comprising a lead comprising a binder, a filler and a coloring agent. The binder comprises a cellulose ester, wherein said cellulose ester comprises one or more acetate moieties and one or more ester moieties selected from $C_3$-$C_{10}$-carboxylates.

**Example**

A lead comprising a cellulose ester as binder, in particular cellulose acetate propionate, was prepared with a composition as shown in Example 1 of Table 1 by compounding. The lead according to Example 1 was then compared to a lead comprising ABS as a binder, as described in the Comparative Example of Table 1.

Table 1 Composition of Example 1 and the Comparative Example

| Chemical name | Example 1 Amount in wt.-% | Comparative Example Amount in wt.-% |
|---|---|---|
| TR6021 Natural from Eastman | 20% | - |
| ABS | - | 20% |
| Kaolin | 47% | 47% |
| Zn stearate | 3% | 3% |

(continued)

| Chemical name | Example 1 Amount in wt.-% | Comparative Example Amount in wt.-% |
|---|---|---|
| Benzoate ester (Benzoflex®) | 5% | 5% |
| Stearic acid | 10% | 10% |
| Organic pigment (PY180, CAS Number: 77804-81-0) | 15% | 15% |

The pencil leads were produced by carrying out the steps detailed below:

1. Mixing and granulating all formulation components of the lead to form a writing substance granulate;

2. Extruding the writing substance granulate at a temperature in the range of 130 to 200°C on an extruder by a suitable mouthpiece to form an endless writing substance strand. In particular, the leads are manufactured from the below compositions by extrusion of an endless writing substance strand using a laboratory single-screw extruder, with 3 zones heated at 170°C, and a round die having a diameter of 2 mm followed by a drawing bench;

3. Cooling the endless writing substance strand, whereby the writing substance strand solidifies;

4. Cutting the endless writing substance strand to final lengths, in particular to the required pencil length.

The properties of chroma ($C^*_{ab}$) and Pencil Flexural resistance (Flexion (daN)) of the leads were measured as described in the following.

Pencil Flexural resistance:

The pencil flexural resistance test was carried out in order to check the resistance of the pencil lead, in particular the resistance to breakage, in particular a value of above 0.6 daN is considered as acceptable for a lead with a diameter of above 2 mm.

For testing a Digital Testing Machine - LF Plus Series - Lloyd Instruments, Ametek, Inc., Pennsylvania, USA, was used. The span of the U-bracket was 6 cm. The descent speed of the sensor was set to 50 mm/min.

The test for the pencil's flexural resistance was carried out by the following protocol:

1. Turn on the testing machine;
2. Locate the sensor in a top position;
3. Fix the pencil on the U-bracket;
4. Move the sensor downwards:
5. Record the results expressed in daN.

The diameter differences between the samples that may occur due to die swell are compensated by calculating the 3-point pencil flexural resistance, relative to a nominal value of 2.8 mm.

Colorimetry

As equipment a Writing apparatus HST 10 by the company HUTT Maschinenbau, Germany was used under the following conditions:

- Writing speed: 4.5 m/min
- Writing angle: 70°
- Furthermore, the following equipment was used:
- ISO paper: AURORA ISO-14145
- Pencil sharpener
- CM-3610 A Spectrophotometer, KONICA MINOLTA, Japan

    - Viewing angle of light: 10°

Table 2

|  | Parameters for producing the deposits |
| --- | --- |
| Article type | Lead (As specified in Table 1) |
| Diameter lead (mm) | 2 |
| Paper feed (mm/min) | 0.15 |
| Total weight article / support / additional weight (g) | 175 |
| Writing length for axial rotation of the article (m) | 9 |
| Writing length (m) | 40 |
| Paper type | AURORA ISO-14145 |

The test for the deposit's chroma was carried out by the following protocol:

1. Place the writing article in the appropriate supports, sharpen the lead if necessary;

2. Produce a deposit according to the parameters specified in Table 2;

3. Measure the chroma of the deposit with the KONICA MINOLTA CM-3610 A spectrophotometer.

To determine the chroma of a lead's deposit in accordance with the invention, the measurement of colorimetry can be performed. The chroma can be measured by colorimetry test by measuring the color difference $\Delta C$ between a sample color's $C^*_{ab}$-value and a comparative color's $C^*_{ab}$-value.

The density of the color of the deposit has been measured in the CIEL*a*b* system using a KONICA MINOLTA CM-3610 A spectrophotometer (settings illuminant: D65, angle 10°, specular components included).

According to this system, L* indicates the lightness of the color of the deposit. The lower the value of L, the darker is the color of the deposit. L* = 0 yields black and L* = 100 indicates diffuse white.

The chromaticity coordinates are expressed by the parameters a* and b*, a* indicating the axis of red/green shades and b* the axis of yellow/blue shades. The chroma $C^*_{ab}$ is obtained from the following formula:

$$C^*_{ab} = \sqrt{a^{*2} + b^{*2}}$$

All colorimetric measurements have been performed on a deposit made on the white paper AURORA ISO-14145.

The greater the value of $C^*_{ab}$, the better the chroma of the color of the deposit.

**Results of the tests**

The composition according to Example 1 had a Flexion of 1.1 daN. The composition according to the comparative example had a Flexion of 0.8 daN. The $C^*_{ab}$ value of the Example 1 was 26.97 and the $C^*_{ab}$ value of the Comparative example was 24.91.

Thus, the lead of example 1, which had a composition according to the invention, had a higher flexural modulus than the flexural modulus of comparative example 1. Further, the lead of example 1 had a higher chroma.

**Aspects**

1. A writing instrument comprising a lead comprising a binder, a filler and a coloring agent, wherein the binder comprises a cellulose ester, wherein said cellulose ester comprises one or more acetate moieties and one or more ester moieties selected from $C_3$-$C_{10}$-carboxylates.

2. The writing instrument according to any preceding aspect, wherein the cellulose ester comprises one or more ester moieties selected from saturated $C_3$-$C_8$-carboxylates, in particular moieties selected from propionate, more specifically n-propionate or iso-propionate, butyrate, more specifically n-butyrate, sec-butyrate or tert-propionate, pentanoate, hexanoate; or mixtures thereof.

3. The writing instrument according to any preceding aspect, wherein the cellulose ester comprises cellulose acetate propionate and/or cellulose acetate butyrate, in particular cellulose acetate propionate.

4. The writing instrument according to aspect 3, wherein the cellulose ester comprises the acetate moieties and the one or more further ester moieties in a molar ratio of from about 10:1 to about 1:10, more specifically, between about 1:1 to about 1:4 and in particular between about 1:1.5 to about 1:3.

5. The writing instrument according to any preceding aspect, wherein the cellulose ester comprises a number-average molecular weight of between about 15.000 g/mol to about 500.000 g/mol, more specifically between about 25.000 g/mol to about 400.000 g/mol and in particular between about 50.000 g/mol to about 200.000 g/mol.

6. The writing instrument according to any preceding aspect, wherein the lead comprises the binder in amounts of between about 5 and about 70 wt.-%, more specifically between about 7 and about 50 wt.-%, and in particular between about 10 and about 40 wt.-%, relative to the total weight of the lead.

7. The writing instrument according to any preceding aspect, wherein the filler comprises an inorganic filler, in particular a mineral filler.

8. The writing instrument according to any preceding aspect, wherein the filler comprises clay, talc, boron nitride, silica, calcium carbonate, mica, steatite powder and mixtures thereof.

9. The writing instrument according to any preceding aspect, wherein the filler comprises a clay selected from the group consisting of montmorillonite, bentonite, kaolin and mixtures thereof; and in particular kaolin.

10. The writing instrument according to any preceding aspect, wherein the filler exhibits a lamellar structure.

11. The writing instrument according to any preceding aspect, wherein the filler is colorless, white, or may have a CIELAB L* value of greater than about 70, more specifically greater than about 75, and in particular greater than about 80, measured according to ISO R457.

12. The writing instrument according to any preceding aspect, wherein the filler comprises particles having a particle size D50 by weight measured by sedimentation, for example, using a SEDIGRAPH® apparatus from the company Micromeritics, of between 1 and 5 μm, more specifically between 1 and 4 μm.

13. The writing instrument according to any preceding aspect, wherein the lead comprises the filler in amounts of between about 15 and about 75 wt.-%, more specifically between about 20 and about 65 wt.-%, and in particular between about 25 and about 55 wt.-%, relative to the total weight of the lead.

14. The writing instrument according to any preceding aspect, wherein the coloring agent comprises one or more pigments, one or more dyes, or mixtures thereof.

15. The writing instrument according to any preceding aspect, wherein the coloring agent comprises one or more pigments, more specifically one or more organic pigments.

16. The writing instrument according to any preceding aspect, wherein the coloring agent comprises azo pigments, diazo pigments, diarylide pigments pthalocyanines, dioxazines, quinacridones, iron oxides, pyrrole diones, titanium oxides, carbon black, graphites, ultramarine, benzimidazole and iron-cyan complexes.

17. The writing instrument according to any preceding aspect, wherein the coloring agent comprises Pigment Yellow 12, Pigment Yellow 110, Pigment Yellow 155, Pigment Yellow 180, Pigment Orange 13, Pigment Orange 36, Pigment Orange 64, Pigment Blue 15:1, Pigment Blue 15:3, Pigment Green 7, Pigment Green 36, Pigment Violet 19, Pigment Violet 23, Pigment Red 48:2, Pigment Red 57:1, Pigment Red 122, Pigment Red 170, Pigment Red 254, Pigment Red 266, Pigment Black 7, Pigment Black 6, Pigment Yellow 42, Pigment Red 101, Pigment White 6.

18. The writing instrument according to any preceding aspect, wherein the lead comprises the coloring agent in amounts of between about 2 and about 50 wt.-%, more specifically between about 5 and about 40 wt.-%, and in particular between about 10 and about 30 wt.-%, relative to the total weight of the lead.

19. The writing instrument according to any preceding aspect, wherein the lead further comprises one or more additives.

20. The writing instrument according to aspect 19, wherein the one or more additives is selected from the group consisting of slip agents, processing agents, coupling agents, dispersants, lubricants, plasticizers, preservatives and mixtures thereof.

21. The writing instrument according to aspects 19 or 20, wherein the one or more additives is selected from the group consisting of

- fatty acid salts;
- fatty acids;
- fatty acid esters;
- plasticizers, in particular phthalate-based plasticizers; adipate-based plasticizers; benzoate-based plasticizers; sebacate-based plasticizers; citrate-based plasticizers;
- amides, in particular as ethylene bis stearamide;
- waxes;
- glycerol and derivatives thereof, in particular glycerol behenate;
- siloxanes;

more specifically fatty acid salts, plasticizers, amides, glycerol and derivatives thereof.

22. The writing instrument according to any one aspects 19 to 21, wherein the one or more additives is selected from the group consisting of stearates such as calcium stearate, magnesium stearate, sodium stearate, zinc stearate and mixtures thereof; amides, in particular stearamides such as ethylene bis stearamide, waxes, fatty acids, glycerol and its derivatives such as glycerol behenate, glycerol dibehenate, glycerol stearate; and/or polyglycerol diisostearate, in particular glycerol behenate, siloxane grafted on polypropylene, maleic anhydride grafted polypropylene, phthalate, adipate, benzoate, sebacate; and/or citrate plasticizers and mixtures thereof; or from the group consisting of calcium stearate, ethylene bis stearamide, phthalates and mixtures thereof.

23. The writing instrument according to any one of aspects 19 to 22, wherein the lead comprises the one or more additives in a total amount of between about 2 and about 35 wt.-%, more specifically between about 5 and about 30 wt.-%, and in particular between about 10 and about 25 wt.-%, relative to the total weight of the lead.

24. The writing instrument according to any preceding aspect, wherein the lead comprises, relative to the total weight of the lead, between about 0.5 and about 35 wt.-%, more specifically between about 1 and about 30 wt.-%, and in particular between about 1.4 and about 25 wt.-%, of one or more fatty acids, more specifically fatty acids comprising between about 8 and about 24 carbon atoms, in particular one or more fatty acids selected from caprylic acid, capric acid, lauric acid, myristic acid, palmitic acid, stearic acid.

25. The writing instrument according to any preceding aspect, wherein the lead comprises, relative to the total weight of the lead, between about 0.5 and about 35 wt.-%, more specifically between about 1 and about 30 wt.-%, and in particular between about 1.4 and about 25 wt.-%, of one or more fatty acid salts, more specifically fatty acid salts comprising between about 8 and about 24 carbon atoms, in particular salts selected from caprylate, caprate, laurate, myristate, palmitate and/or stearate salts.

26. The writing instrument according to any preceding aspect, wherein the lead comprises, relative to the total weight of the lead, between about 0.5 and about 35 wt.-%, more specifically between about 1 and about 30 wt.-%, and in particular between about 1.4 and about 25 wt.-%, of one or more fatty acid salts comprising an alkali metal and/or earth alkali metal, more specifically fatty acid salts comprising between about 8 and about 24 carbon atoms comprising sodium, calcium and/or magnesium, in particular calcium salts of one or more fatty acids selected from calcium caprylate, calcium caprate, calcium laurate, calcium myristate, calcium palmitate, calcium stearate.

27. The writing instrument according to any preceding aspect, wherein the lead comprises, relative to the total weight of the lead, between about 0.5 and about 15 wt.-%, more specifically between about 1 and about 7.0 wt.-%, and in particular between about 1.4 and about 5.0 wt.-%, of one or more fatty acid salts comprising a transition metal, more specifically fatty acid salts comprising between about 8 and about 24 carbon atoms comprising a transition metal, in particular zinc salts of one or more fatty acids selected from zinc caprylate, zinc caprate, zinc laurate, zinc myristate, zinc palmitate, zinc stearate.

28. The writing instrument according to any preceding aspect, wherein the lead comprises, relative to the total weight of the lead, between about 0.5 and about 15 wt.-%, more specifically between about 1 and about 10 wt.-%, and in particular between about 2 and about 8 wt.-%, of one or more plasticizers.

29. The writing instrument according to aspect 28, wherein the one or more plasticizers comprises a plasticizer selected from phthalate-based plasticizers, adipate-based plasticizers, benzoate-based plasticizers, sebacate-based plasticizers, and citrate-based plasticizers; and in particular a benzoate-based plasticizer.

30. The writing instrument according to any preceding aspect, wherein the lead exhibits a hexagonal, round or triangular cross section.

31. The writing instrument according to any preceding aspect, wherein the lead is extrudable, extruded or preparable by extrusion.

32. The writing instrument according to any preceding aspect, wherein the lead is not calcinable, not calcined or not preparable by calcination.

33. The writing instrument according to any preceding aspect, wherein the lead comprises less than about 10 wt.-%, more specifically less than about 5 wt.-% and in particular no or substantially no polyolefins or copolymers comprising olefine-based monomer units.

34. The writing instrument according to any preceding aspect, wherein the lead comprises less than about 10 wt.-%, more specifically less than about 5 wt.-% and in particular no or substantially no polystyrene or copolymers comprising styrene-based monomer units.

35. The writing instrument according to any preceding aspect, wherein the lead comprises less than about 10 wt.-%, more specifically less than about 5 wt.-% and in particular no or substantially no hydroxyalkyl cellulose and alkyl cellulose; and in particular no hydroxypropyl cellulose.

36. The writing instrument according to any preceding aspect, wherein the lead comprises less than about 10 wt.-%, more specifically less than about 5 wt.-% and in particular no or substantially no lactic acid-based polymer, in particular polylactic acid.

37. The writing instrument according to any preceding aspect, wherein the lead has a diameter of between about 2 and 4.2 mm, more specifically between about 2 and about 2.3 mm, or between about 3 and about 3.8 mm or between about 3.4 and about 3.8 mm.

38. The writing instrument according to any preceding aspect, wherein the writing instrument further comprises a casing enclosing the lead.

39. The writing instrument according to aspect 38, wherein the casing comprises wood or wood substitute, in particular wherein the wood substitute can comprise polyolefins or copolymers comprising olefine-based monomer units, polystyrene or copolymers comprising styrene-based monomer units, lactic acid-based polymer, in particular polylactic acid and mixtures thereof.

40. The writing instrument according to aspect 38 or 39, wherein the casing is co-extrudable or co-extruded with the lead.

41. The writing instrument according to any one of aspects 38 to 40, wherein the writing instrument further comprises an intermediate layer between the lead and the casing, wherein the intermediate layer is configured to increase the adhesion between the lead and the casing.

42. The writing instrument according to aspect 41, wherein the intermediate layer comprises ethylene butylene acrylate or a mixture of ethylene butylene acrylate and cellulose or ethylene vinyl acetate or a mixture of ethylene vinyl acetate and cellulose.

43. The writing instrument according to aspects 41 or 42, wherein the casing may be co-extrudable or co-extruded with the lead and the intermediate layer.

44. Method of preparing a writing instrument comprising a lead comprising a binder, a filler and a coloring agent, wherein the binder comprises a cellulose ester, wherein said cellulose ester comprises one or more acetate moieties and one or more further ester moieties selected from $C_3$-$C_{10}$-carboxylates, the method comprising combining the binder, the filler and the coloring agent.

45. The method according to aspect 44, wherein the lead may be prepared by extrusion.

46. Lead for a writing instrument comprising a lead comprising a binder, a filler and a coloring agent, wherein the binder comprises a cellulose ester, wherein said cellulose ester comprises one or more acetate moieties and one or more ester moieties selected from $C_3$-$C_{10}$-carboxylates.

**Claims**

1. A writing instrument comprising a lead comprising a binder, a filler and a coloring agent, wherein the binder comprises a cellulose ester, wherein said cellulose ester comprises one or more acetate moieties and one or more ester moieties selected from $C_3$-$C_{10}$-carboxylates.

2. The writing instrument according to claim 1, wherein the cellulose ester comprises one or more ester moieties selected from saturated $C_3$-$C_8$-carboxylates, in particular moieties selected from propionate, more specifically n-propionate or iso-propionate; butyrate, more specifically n-butyrate, sec-butyrate or tert-propionate; pentanoate; hexanoate; or mixtures thereof.

3. The writing instrument according to any preceding claim, wherein the cellulose ester comprises cellulose acetate propionate and/or cellulose acetate butyrate, and in particular cellulose acetate propionate.

4. The writing instrument according to claim 3, wherein the cellulose ester comprises the acetate moieties and the one or more further ester moieties in a molar ratio of from about 10:1 to about 1:10, more specifically, between about 1:1 to about 1:4 and in particular between about 1:1.5 to about 1:3.

5. The writing instrument according to any preceding claim, wherein the cellulose ester comprises a number-average molecular weight of between about 15.000 g/mol to about 500.000 g/mol, more specifically between about 25.000 g/mol to about 400.000 g/mol and in particular between about 50.000 g/mol to about 200.000 g/mol.

6. The writing instrument according to any preceding claim, wherein the lead comprises the binder in amounts of between about 5 and about 70 wt.-%, more specifically between about 7 and about 50 wt.-%, and in particular between about 10 and about 40 wt.-%, relative to the total weight of the lead.

7. The writing instrument according to any preceding claim, wherein the filler comprises an inorganic filler, in particular a mineral filler.

8. The writing instrument according to any preceding claim, wherein the filler comprises clay, talc, boron nitride, silica, calcium carbonate, mica, steatite powder and mixtures thereof.

9. The writing instrument according to any preceding claim, wherein the filler exhibits a lamellar structure.

10. The writing instrument according to any preceding claim, wherein the filler is colorless, white, or may have a CIELAB L* value of greater than about 70, more specifically greater than about 75, and in particular greater than about 80, measured according to ISO R457.

11. The writing instrument according to any preceding claim, wherein the filler comprises particles having a particle size D50 of between 1 and 5 $\mu$m, more specifically between 1 and 4 $\mu$m.

12. The writing instrument according to any preceding claim, wherein the coloring agent comprises one or more pigments, one or more dyes, or mixtures thereof.

13. The writing instrument according to any preceding claim, wherein the lead further comprises one or more additives, in particular one or more additives selected from the group consisting of slip agents, processing agents, coupling agents, dispersants, lubricants, plasticizers, preservatives and mixtures thereof.

14. The writing instrument according to any preceding claim, wherein the lead is not calcinable, not calcined or not preparable by calcination.

15. Method of preparing a writing instrument comprising a lead comprising a binder, a filler and a coloring agent, wherein the binder comprises a cellulose ester, wherein said cellulose ester comprises one or more acetate moieties and one or more further ester moieties selected from $C_3$-$C_{10}$-carboxylates, the method comprising combining the binder, the filler and the coloring agent.

Europäisches
Patentamt

European
Patent Office

Office européen
des brevets

# EUROPEAN SEARCH REPORT

Application Number

EP 21 30 6487

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/252409 A1 (NAKAMURA KEIKO [JP] ET AL) 17 November 2005 (2005-11-17) | 1-15 | INV. B43K19/18 C09D13/00 |
| Y | * paragraph [0037] - paragraph [0101] * ----- | 2-14 | |
| X | US 2 988 784 A (ZAREH LORENIAN) 20 June 1961 (1961-06-20) | 1,15 | |
| Y | * the whole document * ----- | 2-14 | |
| A | US 3 993 408 A (ARONS IRVING J ET AL) 23 November 1976 (1976-11-23) * the whole document * ----- | 1-15 | |

TECHNICAL FIELDS SEARCHED (IPC)

B43K
C09G
C09D

The present search report has been drawn up for all claims

| Place of search | Date of completion of the search | Examiner |
|---|---|---|
| Munich | 25 March 2022 | Kelliher, Cormac |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 21 30 6487

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2022

| Patent document cited in search report | | Publication date | Patent family member(s) | | Publication date |
|---|---|---|---|---|---|
| US 2005252409 | A1 | 17-11-2005 | NONE | | |
| US 2988784 | A | 20-06-1961 | BE | 489862 A | 25-03-2022 |
| | | | FR | 989587 A | 11-09-1951 |
| | | | NL | 80121 C | 25-03-2022 |
| | | | US | 2988784 A | 20-06-1961 |
| US 3993408 | A | 23-11-1976 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Plasticizer. Encyclopedic Dictionary of Polymers. 2007, 727

- Calcination. Encyclopedic Dictionary of Polymers. 2007, 147
- *CHEMICAL ABSTRACTS,* 77804-81-0